**Europäisches Patentamt**

**European Patent Office**

**Office européen des brevets**

(11) Veröffentlichungsnummer: **0 048 937**
**A1**

(12) ## EUROPÄISCHE PATENTANMELDUNG

(21) Anmeldenummer: **81107532.4**

(22) Anmeldetag: **22.09.81**

(51) Int. Cl.³: **G 11 B 5/45**, G 11 B 5/09

(30) Priorität: **26.09.80 US 190972**

(43) Veröffentlichungstag der Anmeldung: **07.04.82**
**Patentblatt 82/14**

(84) Benannte Vertragsstaaten: **DE FR GB IT NL SE**

(71) Anmelder: **SIEMENS AKTIENGESELLSCHAFT Berlin und München, Postfach 22 02 61, D-8000 München 22 (DE)**

(72) Erfinder: **Holt, Dewilton Robert, 25104 Cineria Way, El Toro California 92630 (US)**

(54) Schaltungsanordnung zum Lesen von auf einem magnetischen Aufzeichnungsmedium aufgezeichneten Daten.

(57) Zum Entzerren von Lesesignalen, die auf einem magnetischen Aufzeichnungsmedium (12) aufgezeichneten Daten zugeordnet sind, ist in der Schaltungsanordnung ein Entzerrerfilter (20) vorgesehen, das einen Frequenzgang aufweist, der durch die Laplace-Transformierte

$$F(s) = \frac{1 - T_1 T_2 s^2}{T_2 s + 1}$$

dargestellt wird. Der Frequenzgang des Entzerrerfilters (20) weist in der komplexen Ebene bei niedrigen Frequenzen eine Nullstelle und bei hohen Frequenzen eine Polstelle auf. Zusätzlich kann eine Schaltstufe (16) vorgesehen sein, die das Entzerrerfilter (20) immer dann überbrückt, wenn Daten mit einer geringen Aufzeichnungsdichte auf dem Aufzeichnungsmedium (12) gespeichert sind. Die Schaltungsanordnung wird vorzugsweise bei Floppy Disk-Geräten eingesetzt und die Schaltstufe (16) wird durch einen Spurzähler (22) gesteuert, so daß das Entzerrerfilter (20) nur beim Lesen von Daten von den inneren Spuren eingeschaltet ist. Dem Entzerrerfilter (20) kann zur Erhöhung der Störsicherheit ein Gaussches Filter (24) nachgeschaltet sein.

SIEMENS AKTIENGESELLSCHAFT    Unser Zeichen
Berlin und München            VPA 80 P 8238 E

0048937

## Schaltungsanordnung zum Lesen von auf einem magnetischen Aufzeichnungsmedium aufgezeichneten Daten

Die vorliegende Erfindung bezieht sich auf eine Schaltungsanordnung zum Lesen von auf einem magnetischen Aufzeichnungsmedium aufgezeichneten Daten, bei der ein Magnetkopf den aufgezeichneten Daten zugeordnete Lesesignale erzeugt, bei der Verstärker diese Lesesignale verstärken und bei der ein Entzerrerfilter die Lesesignale entzerrt.

Schaltungsanordnungen zum Lesen von digitalen Daten, die auf einem Aufzeichnungsträger, beispielsweise einer biegsamen Magnetscheibe (Floppy Disk) aufgezeichnet sind, enthalten normalerweise einen Lesekopf, üblicherweise einen Magnetkopf, zum Erzeugen von Lesesignalen, die den aufgezeichneten Daten zugeordnet sind, einen Verstärker zum Verstärken dieser Lesesignale, ein geeignetes Filter zum Umformen der Lesesignale und einen Decodierer zum Wiedergewinnen der Daten aus den gefilterten Lesesignalen.
In derartigen Schaltungsanordnungen werden zwei Arten von Filtern gelegentlich benutzt. Einerseits ein sog. Entzerrerfilter, bei dem die höherfrequenten Anteile der Lesesignale angehoben werden, um die beim Schreib- und beim Lesevorgang auftretenden Verzerrungen zu kompensieren und andererseits ein sog. Gauss'sches Filter, das weißes Rauschen und andere höherfrequente Störsignale in den Lesesignalen beseitigt.

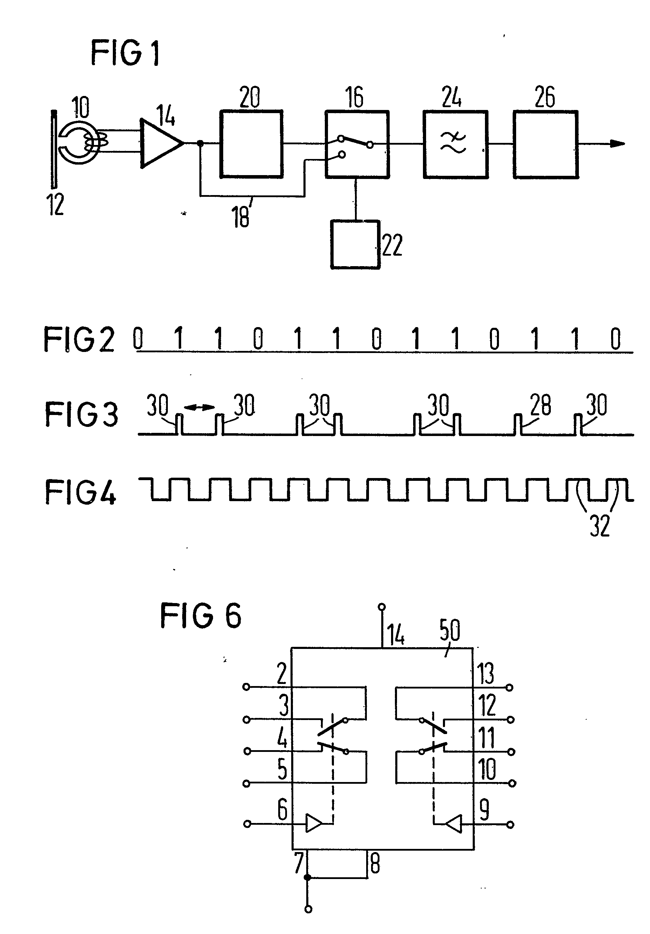

Auf die Entwicklung von Entzerrerfiltern zum Lesen von auf magnetische Aufzeichnungsmedien aufgezeichneten Daten wurde sehr viel Aufmerksamkeit gerichtet. R.C. Schneider beschreibt in einer Veröffentlichung "An Improved Pulse-Sliming Method for Magnetic Recording" in IEEE Transactions on Magnetics, Vol. MAG-11, Nr. 5, Sept. 1975,

Ret 1 Kdg / 3. Juli 1981

einen Schaltkreis zur Impulsverschmälerung,der es ermöglicht, die Steilheit der Vorder- und der Rückflanke einzelner Leseimpulse unabhängig voneinander zu verändern. Die erste Stufe dieses Schaltkreises (dort dargestellt in Fig. 1) versteilert die abfallende Flanke des Leseimpulses durch das Hinzufügen eines Teils der ersten Ableitung des Leseimpulses. Die zweite Stufe versteilert die ansteigende Flanke des Leseimpulses durch Subtraktion eines Teiles der ersten Ableitung des Leseimpulses. Dieser Schaltkreis, kombiniert mit einem Integrator, der die Spitzen in Nulldurchgänge umsetzt, entzerrt die Phase und die Amplitude des Aufzeichnungskanals. Der Frequenzgang dieses Schaltkreises ist dort in Fig. 8 dargestellt.

In einer Veröffentlichung der IBM Corporation, San Jose, Californien, "Signal Processing For Increased Bit Densities In Digital Magnetic Recording" beschreibt G.E. Schlaepfer die durch eine gegenseitige Beeinflussung von benachbarten Leseimpulsen verursachte Veränderung von Lesesignalen. Wie in Fig. 2 dieser Veröffentlichung dargestellt ist, führt eine Zunahme der Aufzeichnungsdichte über denjenigen Wert hinaus, bei dem die Bitperiode kleiner ist als die Hälfte der Impulsbreite zu einer nachteiligen Beeinflussung von benachbarten Leseimpulsen. Bei zwei benachbarten Binärwerten "1", die von Binärwerten "0" umgeben sind, tritt das bekannte Phänomen der Spitzenverschiebung ein.

Diese Spitzenverschiebung kann als lineare Überlagerung von einzelnen Leseimpulsen betrachtet werden, so daß die Analyse der Lesesignale auf die Behandlung eines einzelnen repräsentativen Leseimpulses zurückgeführt werden kann.

Um eine höhere Aufzeichnungsdichte zu erreichen, ohne daß eine Impulsbeeinflussung eintritt, schlägt Schlaepfer als Beispiel ein Filter zur Impulsverschmälerung vor.

Ähnlich wie der Schaltkreis von Schneider verstärkt dieses Filter die höherfrequenten Anteile der Lesesignale. Dies wird dadurch erreicht, daß das Erfordernis einer linearen Verzögerungszeit des Filters erfüllt wird, d.h., daß es die gleiche Phasenverzögerung für alle Frequenzen aufweist. Jedoch hat dieses Filter zwei hervorstechende Nachteile: Einerseits hat es einen Verstärkungsanstieg von 12 dB/Oktave, was eine zu starke Amplitudenanhebung bei den höherfrequenten Anteilen bedeutet und andererseits verwendet es ein passives Netzwerk, welches eine Polstelle bei niedrigen Frequenzen aufweist, was dazu führt, daß ein Differentiator hinzugefügt werden muß, um diese Polstelle aufzuheben.

Der vorliegenden Erfindung liegt die Aufgabe zugrunde, eine Schaltungsanordnung zum Lesen von auf einem Aufzeichnungsmedium gespeicherten Daten anzugeben, die es ermöglicht, mehr Informationen auf der Oberfläche des Aufzeichnungsmediums zu speichern, als dies bisher möglich war und die die Nachteile der bekannten Filter vermeidet.

Erfindungsgemäß wird die Aufgabe bei der Schaltungsanordnung der eingangs genannten Art dadurch gelöst, daß das Entzerrerfilter einen Frequenzgang aufweist, der durch die Laplace-Transformierte

$$F(s) = \frac{1 - T_1 T_2 s^2}{T_2 s + 1}$$

festgelegt wird, wobei

s die komplexe Frequenz $\sigma + j\omega$ darstellt,

$T_1$ eine Zeitkonstante ist, die bei hohen Frequenzen in der komplexen s-Ebene eine Polstelle bewirkt und

$T_2$ eine Zeitkonstante ist, die bei niedrigen Frequenzen in der komplexen s-Ebene eine Nullstelle bewirkt.

Das Entzerrerfilter erzeugt eine lineare Zeitverzögerung und einen Verstärkungsanstieg im Bereich von 4 bis 8 dB/ Oktave (etwa 6 dB) bei Frequenzen in dem Bereich der Grundschwingung und der zweiten Harmonischen von Lesesignalen, die die Datenbitfolge 110110 darstellen. Diese Datenbitfolge erzeugt die ungünstigsten Lesesignale, da in diesem Fall die größtmögliche Spitzenverschiebung infolge von gegenseitiger Beeinflussung der Leseimpulse erzeugt wird.

Eine vorteilhafte Dimensionierung des Entzerrerfilters wird erreicht, wenn $T_1$ und $T_2$ symmetrisch zum Nutzfrequenzbereich der Lesesignale angeordnet sind. Hierbei ist es vorteilhaft, wenn die Nullstelle unterhalb der Grundfrequenz der Lesesignale und die Polstelle oberhalb der zweiten Harmonischen der Lesesignale angeordnet wird, wenn diese die Datenbitfolge 110110 darstellen.

Eine bevorzugte Ausführungsform der Schaltungsanordnung ist dadurch gekennzeichnet, daß das Entzerrerfilter gebildet wird aus einem Operationsverstärker, der einen positiven und einen negativen Eingang aufweist, einem ersten Widerstand, der den Eingang des Entzerrerfilters mit dem positiven Eingang des Operationsverstärkers verbindet, einem ersten Kondensator, der das Bezugspotential des Entzerrerfilters an den positiven Eingang des Operationsverstärkers anlegt, einem zweiten Kondensator, der den Eingang des Entzerrerfilters mit dem negativen Eingang des Operationsverstärkers verbindet und einem zweiten Widerstand, der den Ausgang des Operationsverstärkers mit dessen negativem Eingang verbindet. Um die Stabilisierung des Entzerrerfilters zu verbessern, ist es günstig, wenn das Entzerrerfilter einen Stabilisierungskondensator enthält, der parallel zum zweiten Widerstand angeordnet ist und/ oder das Entzerrerfilter einen Stabilisierungswiderstand enthält, der in Serie mit dem zweiten Kondensator angeordnet ist.

Entsprechend einer weiteren Ausführungsform der vorliegenden Erfindung ist der Verstärker für das Lesesignal ein Differenzverstärker, der einen differentiellen Eingang und einen differentiellen Ausgang aufweist. Das Entzerrerfilter wird in diesem Fall aus zwei identischen Filtern gebildet, von denen jedes an einem Ausgang angeschlossen ist. Vorzugsweise haben die Filteranordnungen ein gemeinsames, schwebendes Bezugspotential.

Zur Erhöhung der Sicherheit gegen hochfrequente Störungen ist es vorteilhaft, wenn dem Entzerrerfilter ein Gauss'sches Filter nachgeschaltet ist.

Entsprechend einer bevorzugten Ausführungsform der Schaltungsanordnung ist es vorteilhaft, wenn eine Schaltstufe vorgesehen ist, die wahlweise das Entzerrerfilter überbrückt, wenn eine Entzerrung der Lesesignale nicht er-wünscht ist. Die Schaltstufe erweist sich insbesondere dann als zweckmäßig, wenn Daten mit unterschiedlicher Aufzeichnungsdichte gespeichert werden. Beim Lesen von mit niedriger Aufzeichnungsdichte gespeicherten Daten kann dann das Entzerrerfilter überbrückt werden. Damit wird verhindert, daß das Entzerrerfilter die Lesesignale infolge einer zu starken Anhebung überkompensiert.

Die Schaltstufe wird insbesondere dann in vorteilhafter Weise eingesetzt, wenn sie mit einem Spurzähler verbunden ist, der das Entzerrerfilter überbrückt, wenn Spuren gelesen werden, die mindestens einen vorgegebenen Radius aufweisen.

Im folgenden wird ein mit den Merkmalen der Erfindung ausgestattetes Ausführungsbeispiel anhand von Zeichnungen näher erläutert. Es zeigen, wobei gleiche Einheiten, die in den verschiedenen Figuren dargestellt sind, mit denselben Bezugszeichen versehen sind:

Figur 1 ein Blockdiagramm einer für ein Floppy Disk-Gerät vorgesehenen Schaltungsanordnung zum Lesen von aufgezeichneten digitalen Daten,

Figur 2 ein erstes Zeitdiagramm, das die Arbeitsweise der in Fig. 1 dargestellten Schaltungsanordnung zeigt,

Figur 3 ein zweites Zeitdiagramm, das die Arbeitsweise der in Fig. 1 dargestellten Schaltungsanordnung zeigt,

Figur 4 ein drittes Zeitdiagramm, das die Arbeitsweise der in Fig. 1 dargestellten Schaltungsanordnung zeigt,

Figur 5 ein Schaltbild eines Entzerrerfilters und einer Schaltstufe in der in Fig. 1 dargestellten Schaltungsanordnung,

Figur 6 ein Ersatzschaltbild, das die Arbeitsweise der in Fig. 5 dargestellten Schaltstufe zeigt,

Figur 7 ein Schaltbild der in Fig. 1 dargestellten Schaltungsanordnung.

Figur 1 zeigt den grundsätzlichen Aufbau einer für ein Floppy Disk-Gerät vorgesehenen Schaltungsanordnung zum Lesen der gespeicherten Daten. Diese Schaltungsanordnung enthält einen Lesekopf oder Magnetkopf 10, der mit der Magnetscheibe (Floppy Disk) 12 zusammenarbeitet. Durch den Magnetkopf 10 erzeugte Lesesignale werden in einem Vorverstärker 14 verstärkt und einer Schaltstufe 16 sowohl direkt über eine Leitung 18 als auch indirekt über ein Entzerrerfilter 20 zugeführt. Die Schaltstufe 16 wählt, gesteuert durch einen Sparzähler 22, in Abhängigkeit von der Spurposition des Magnetkopfs 10 entweder die gefilterten oder die ungefilterten Lesesignale aus. In den äußeren Spuren der Floppy Disk 12, wo die Umfangsgeschwindigkeit größer ist, beispielsweise den Spuren 60 bis 76, weist die Schaltstufe 16 eine Stellung auf, in der ihr die Lesesignale direkt vom Vorverstärker 14 zugeführt werden. Bei den inneren Spuren der Floppy Disk 12, für die die Realtivgeschwindigkeit zwischen dem Magnetkopf 10 und der Floppy Disk 12 geringer ist, ist der Schalter 16 derart eingestellt, daß ihm die Lesesignale über das Entzerrerfilter 20 zugeführt werden. Auf diese Weise wird die durch das Entzerrerfilter 20 eingeführte Verstärkung nur dann genutzt, wenn sie benötigt wird, um die gegenseitige Beeinflussung der Leseimpulse zu kompensieren.

Die Lesesignale, die durch die Schaltstufe 16 ausgewählt werden, werden einem Tiefpaßfilter 24 zugeführt, das hochfrequente Störsignale beseitigt. Die verstärkten und gefilterten Lesesignale werden dann einem Detektor 26 zugeführt, der eine serielle digitale Datenfolge zurückgewinnt. Der Detektor 26 enthält eine Differenzierstufe, der ein Komparator nachgeschaltet ist, der seinerseits die Analogsignale digitalisiert. Die Ausgangssignale können dadurch umgeformt werden, daß sie über eine monostabile Kippstufe geführt werden.

Figur 3 stellt ideale Leseimpulse dar, die in dem Magnetkopf 10 erzeugt werden und die die in Fig. 2 dargestellten digitalen Daten darstellen, wenn beispielsweise die modifizierte Frequenzmodulation (MFM) als Aufzeichnungsverfahren verwendet wird. Wie ersichtlich, wird jeder Binärwert "1" durch einen Leseimpuls 30 dargestellt, wogegen jeder Binärwert "0" durch die Abwesenheit eines Leseimpulses dargestellt wird. Eine Taktsynchronisierung wird während zwei oder mehr benachbarten Binäwerten "0" durch die Einfügung von Synchronisationsimpulsen 28 in der Mitte zwischen Erwartungszeiträumen für die Binärwerte "0" oder "1" aufrechterhalten.

Figur 4 zeigt ein Taktsignal, das durch einen Taktgenerator aus den Daten- und Synchronisationsimpulsen 30 bzw. 28 gewonnen werden kann. Dieses Taktsignal kann derart aufgefaßt werden, daß es einzelne zeitliche "Fenster" durch Impulse 32 darstellt, mit denen die Synchronisationsimpulse 28 von den Datenimpulsen 30 getrennt werden können. Die Synchronisationsimpulse 28 fallen zwischen die Fenster und werden nicht als Datenimpulse erkannt. Normalerweise wird diese Datentrennung oder Decodierung durch einen Phasenregelkreis erreicht, der von der beschriebenen Schaltungsanordnung getrennt ist.

Eine Betrachtung der Fig. 2,3 und 4 führt die Bedeutung vor Augen, die relative zeitliche Lage der Datenimpulse 30 aufrechtzuerhalten. Jede zeitliche Verschiebung der Datenimpulse kann dazu führen, daß sie außerhalb des entsprechenden zeitlichen Fensters fallen und nicht erkannt werden. Mittels des Entzerrerfilters 20 ist es möglich, eine vorhandene Verschiebung zu entfernen oder zumindest zu vermindern, so daß digitale Daten in beliebiger Aufeinanderfolge decodiert werden können.

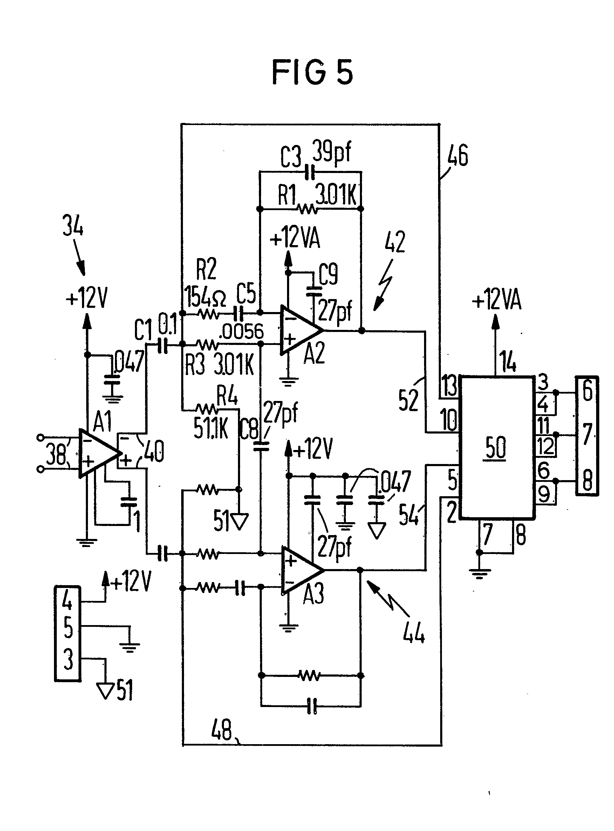

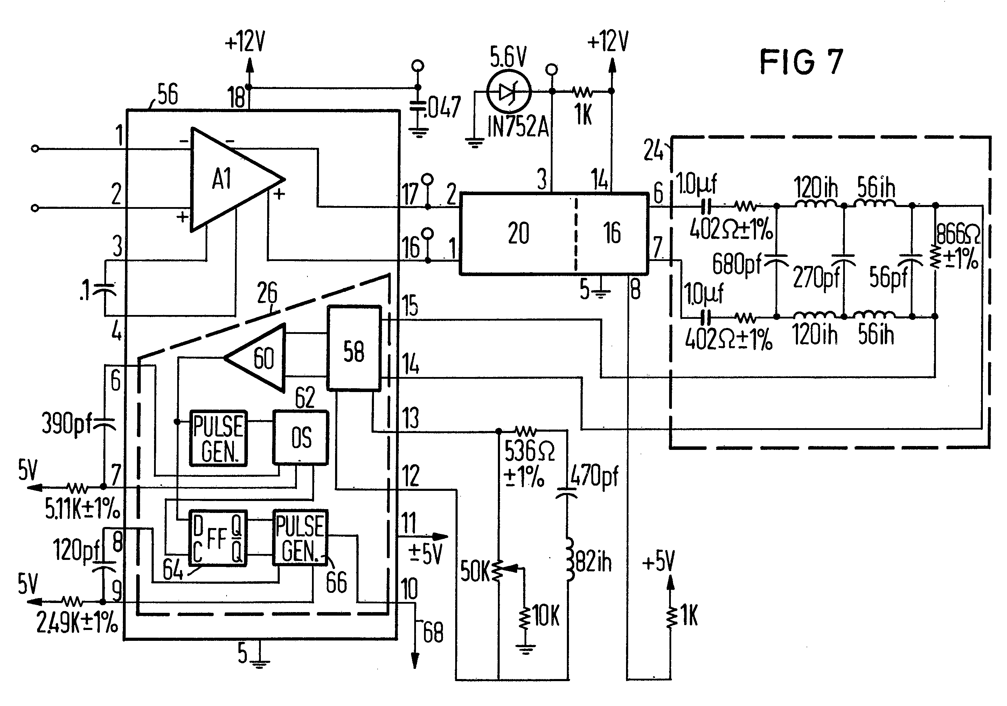

Die Figur 5 zeigt einen Teil einer bevorzugten Aus-führungsform der Schaltungsanordnung. Diese Schaltungs-anordnung  enthält einen Vorverstärker, ein Entzerrerfilter und eine Schaltstufe. Der Vorverstärker enthält einen Differenzverstärker A1, der differentielle Eingänge 38 und differentielle Ausgänge 40 aufweist. Diese Ausgänge 40 sind einerseits über Entkopplungskondensatoren C1 und C2 mit zwei identischen Entzerrerfiltern 42 und 44 und andererseits mit Leitungen 46 und 48 verbunden. Die Leitungen 46 und 48 und die Ausgänge 52 und 54 der Entzerrerfilter 42 und 44 sind mit einer Schaltstufe 50 verbunden. Die Schaltstufe 50 besteht aus vier Feldeffekttransistoren, die entsprechend zwei zweipoligen gleichzeitig geschalteten Schaltern arbeiten, wie es schematisch in Figur 6 dargestellt ist. Eine derartige Schaltstufe kann auch aus diskreten Bauelementen aufgebaut werden, ist jedoch auch als integrierter Schaltkreis unter der Nummer DG 303 erhältlich.

Wie in den Figuren 5 und 6 dargestellt ist, verbindet die Schaltstufe 50 entweder die Eingänge 10 und 5, denen die Lesesignale von den Filtern 42 bzw. 44 zugeführt werden, mit den Ausgängen 11 und 4 oder verbindet die Eingänge 13 und 2, denen die Lesesignale über die Leitungen 46 bzw. 48 zugeführt werden, mit den Ausgängen 12 und 3. Sowohl die Ausgänge 3 und 4 als auch die Ausgänge 11 und 12 sind miteinander verbunden und ihrerseits mit den Anschlußpunkten 6 bzw. 7 einer Schaltungsbaugruppe verbunden.

Ein Anschlußpunkt 8 der Schaltungsbaugruppe ist mit einem Spurzähler 22 verbunden und diesem wird ein Signal mit dem Binärwert "1" zugeführt, wenn das Floppy Disk-Laufwerk aufgefordert wird, Daten von einer der Spuren 66 bis 76 zu lesen. Dieses Signal wird den Anschlußpunkten 7 und 8 der Schaltstufe 50 zugeführt, um die Schalter in die entgegengesetzte Lage zu bringen. Falls das Signal mit dem Binärwert "0" vorliegt, verbindet die Schaltstufe 50 die Filter 42 und 44 mit den Ausgängen 6 und 7.

Die Filter 42 und 44 enthalten jeweils einen Operationsverstärker A2 bzw. A3 und sind mit einem Punkt verbunden, an dem ein gemeinsames schwebendes Bezugspotential 51 anliegt. Als Verstärker können Schaltkreise verwendet werden, die im Handel unter der Nummer 2627 erhältlich sind. Da die Filter 42 und 44 identisch sind, wird im folgenden nur das Filter 42 beschrieben. Unter bestimmten Umständen wird tatsächlich auch nur eines dieser Filter benötigt.

Der Operationsverstärker A2 und die angeschlossenen zugehörigen Bauelemente integrieren die ankommenden Lesesignale, differenzieren sie und subtrahieren die differenzierten Lesesignale von den integrierten Lesesignalen. Im einzelnen wird das Integrierglied aus den Bauelementen R3 und C8 gebildet, während das Differenzierglied aus den Bauelementen R1 und C5 gebildet wird.

Im Frequenzbereich arbeitet das Filter 42 entsprechend der Laplace-Transformierten:

$$F(s) = \frac{1 - T_1 T_2 s^2}{T_2 s + 1} \quad , \text{ wobei}$$

s die komplexe Frequenz $\sigma + j\omega$ darstellt,

$T_1$ eine dem Produkt aus R3 und C8 entsprechende Zeitkonstante ist, die bei hohen Frequenzen in der komplexen s-Ebene eine Polstelle bewirkt und

$T_2$ eine dem Produkt aus R1 und C5 entsprechende Zeitkonstante ist, die bei niedrigen Frequenzen in der komplexen s-Ebene eine Nullstelle bildet.

Der Verstärker A2 subtrahiert die Nullstelle von der Polstelle, um ein Polynom der Form $1 - T_1 T_2 s^2$ zu bilden. Dieses Polynom erzeugt eine lineare Zeitverzögerungsfunktion mit einem Verstärkungsanstieg von 12 dB/Oktave. Gemäß der Erfindung wird eine zusätzliche Polstelle in der Laplace-Transformierten $T_2 s+1$ vorgesehen, um zu steuern, mit welcher Steigung die Verstärkung zunimmt. Der Schaltungsentwurf erfordert, daß diese Polstelle im hochfrequenten Bereich liegt, wodurch es nicht mehr erforderlich ist, ein zusätzliches Differenzierglied vorzusehen.

Zweckmäßigerweise werden $T_1$ und $T_2$ derart gewählt, daß sie symmetrisch zum Nutzfrequenzbereich der Lesesignale angeordnet sind. Die Nullstelle wird unterhalb der Grundfrequenz der Lesesignale und die Polstelle wird oberhalb der zweiten Harmonischen der Lesesignale angeordnet, wenn diese die Datenbitfolge 110110 darstellen.

Ein Widerstand R2 dient zur Stabilisierung des Filters 42. Ein Kondensator C1 wird zur Gleichspannungsentkopplung des Verstärkers A1 verwendet. Ein Widerstand R4 erzeugt eine Gleichspannungsvorspannung für den Verstärker A2. Kondensatoren C3 und C  dienen zur weiteren Stabilisierung des Verstärkers A2.

Wie oben angegeben, sind die Filter 42 und 44 identisch, und beide  Filter  42 und 44 werden verwendet wegen der differentiellen Ausgänge 40 des Verstärkers A1. Zwei Entzerrerfilter sind jedoch nicht immer erforderlich.

Figur 7 zeigt die in Figur 1 dargestellte Schaltungsanordnung in Einzelheiten. Das Entzerrerfilter 20 und die Schaltstufe 16, die in Figur 7 in Form von Blöcken dargestellt sind, entsprechen  den in Figur 5 dargestellten Filtern 42 und 44 und der Schaltstufe 50.

Die in Figur 7 dargestellte Schaltungsanordnung enthält einen integrierten Schaltkreis 56, der den Vorverstärker A1 und einen Detektor 26 aufweist; er kann selbstverständlich auch aus diskreten Bauelementen aufgebaut sein. Der integrierte Schaltkreis ist im Handel unter der Nummer MC3470 erhältlich.

Der in Figur 7 dargestellte Schaltkreis enthält auch ein Gauss'sches Filter 24, das am Ausgang des Entzerrerfilters 20 und der Schaltstufe 16 angeschlossen ist. Das Gauss'sche Filter hat vorzugsweise eine Grenzfrequenz bei etwa 600 Hz. Es stellt ein Tiefpaßfilter dar und entfernt weißes Rauschen und kann zusammen mit dem Entzerrerfilter 20 die lineare Zeitverzögerung verbessern.

Der Ausgang des Filters 24 ist mit einer Detektorstufe 26 verbunden, die ein Differenzierglied 58, einen Komparator 60 und eine monostabile Kippstufe 62 enthält. Der Ausgang der monostabilen Kippstufe ist über ein Flip-Flop 64 mit einem Impulsgenerator 66 verbunden, der Ausgangssignale erzeugt und über die Leitung 68 abgibt.

10 Patentansprüche
 7 Figuren

Patentansprüche

1. Schaltungsanordnung zum Lesen von auf einem magnetischen Aufzeichnungsmedium aufgezeichneten Daten, bei der ein Magnetkopf den aufgezeichneten Daten zugeordnete Lesesignale erzeugt, bei der Verstärker diese Lesesignale verstärken und bei der ein Entzerrerfilter die Lesesignale entzerrt,

d a d u r c h   g e k e n n z e i c h n e t ,

daß das Entzerrerfilter (20,42,44) einen Frequenzgang aufweist, der durch die Laplace-Transformierte:

$$F(s) = \frac{1 - T_1 T_2 s^2}{T_2 s + 1}$$

festgelegt wird, wobei

s die komplexe Frequenz $\sigma + j\omega$ darstellt,

$T_1$ eine Zeitkonstante ist, die bei hohen Frequenzen in der komplexen s-Ebene eine Polstelle bewirkt und

$T_2$ eine Zeitkonstante ist, die bei niedrigen Frequenzen in der komplexen s-Ebene eine Nullstelle bewirkt.

2. Schaltungsanordnung nach Anspruch 1,

d a d u r c h   g e k e n n z e i c h n e t ,

daß $T_1$ und $T_2$ symmetrisch zum Nutzfrequenzbereich der Lesesignale angeordnet sind.

3. Schaltungsanordnung nach Anspruch 1 oder Anspruch 2,

d a d u r c h   g e k e n n z e i c h n e t ,

daß die Nullstelle unterhalb der Grundfrequenz der Lesesignale und die Polstelle oberhalb der zweiten Harmonischen der Lesesignale angeordnet wird, wenn diese die Datenbitfolge 110110 darstellen.

0048937

VPA 80 P 8238 E

4. Schaltungsanordnung nach einem der Ansprüche 1 bis 3, d a d u r c h   g e k e n n z e i c h n e t , daß das Entzerrerfilter (20,42,44) gebildet wird aus einem Operationsverstärker (A2, A3), der einen positiven und einen negativen Eingang aufweist, einem ersten Widerstand (R3), der den Eingang des Entzerrerfilters (20,42,44) mit dem positiven Eingang des Operationsverstärkers (A2, A3) verbindet, einem ersten Kondensator (C8), der das Bezugspotential des Entzerrerfilters (20,42,44) an den positiven Eingang des Operationsverstärkers (A2, A3) anlegt, einem zweiten Kondensator (C5), der den Eingang des Entzerrerfilters (20,42,44) mit dem negativen Eingang des Operationsverstärkers (A2, A3) verbindet und einem zweiten Widerstand (R1), der den Ausgang des Operationsverstärkers (A2, A3) mit dessen negativem Eingang verbindet.

5. Schaltungsanordnung nach Anspruch 4, d a d u r c h   g e k e n n z e i c h n e t , daß das Entzerrerfilter (20,42,44) einen Stabilisierungskondensator (C3) enthält, der parallel zum zweiten Widerstand (R1) angeordnet ist.

6. Anordnung nach Anspruch 4 oder Anspruch 5, d a d u r c h   g e k e n n z e i c h n e t , daß das Entzerrerfilter (20,42,44) einen Stabilisierungswiderstand (R2) enthält, der in Serie mit dem zweiten Kondensator (C5) angeordnet ist.

7. Schaltungsanordnung nach einem der Ansprüche 1 bis 6, d a d u r c h   g e k e n n z e i c h n e t , daß das Entzerrerfilter (20) zwei identische Filter (42,44) enthält, die jeweils an einem Ausgang eines als Verstärker dienenden Differenzverstärkers (A1) angeschlossen sind.

VPA 80 P 8238 E

8. Schaltungsanordnung nach einem der Ansprüche 1 bis 7, d a d u r c h   g e k e n n z e i c h n e t , daß dem Entzerrerfilter (20,42,44) ein Gauss'sches Filter nachgeschaltet ist.

9. Schaltungsanordnung nach einem der Ansprüche 1 bis 8, d a d u r c h   g e k e n n z e i c h n e t , daß eine Schaltstufe (50,16) vorgesehen ist, die wahlweise das Entzerrerfilter (20) überbrückt, wenn eine Entzerrung der Lesesignale nicht erwünscht ist.

10. Schaltungsanordnung nach Anspruch 9, bei der als Aufzeichnungsmedium eine mit konstanter Geschwindigkeit rotierende biegsame Magnetscheibe vorgesehen ist, die Spuren mit unterschiedlichen Radien aufweist, d a d u r c h   g e k e n n z e i c h n e t , daß die Schaltstufe (50,16) mit einem Spurzähler (22) verbunden ist, der das Entzerrerfilter (20,42,44) überbrückt, wenn Spuren gelesen werden, die mindestens einen vorgegebenen Radius aufweisen.

FIG 1

FIG 2   0   1   1   0   1   1   0   1   1   0   1   1   0

FIG 3

FIG 4

FIG 6

FIG 5

3/3

0048937

FIG 7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | US - A - 4 110 798 (AMPEX CORP.) <br> * Spalte 2, Zeile 5 bis Spalte 3, Zeile 48; Fig. 1, 2 * <br> -- | |
| A | FR - A1 - 2 281 009 (IBM) <br> * Seite 1, Zeile 1 bis Seite 3, Zeile 6; Fig. 1 * <br> -- | |
| A | US - A - 4 081 756 (SPERRY RAND CORP.) <br> * Spalte 1, Zeile 14 bis Spalte 4, Zeile 68 * <br> ---- | |

**KLASSIFIKATION DER ANMELDUNG (Int. Cl.³)**

G 11 B    5/45
G 11 B    5/09

**RECHERCHIERTE SACHGEBIETE (Int. Cl.³)**

G 11 B    5/00
H 03 H    11/12
H 03 K    5/01

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 22-12-1981 | ROGNONI |

EPA form 1503.1   06.78